# EUROPÄISCHE PATENTSCHRIFT

(11) **EP 1 867 378 B1**
(45) Veröffentlichungstag und Bekanntmachung des Hinweises auf die Patenterteilung: **09.07.2008**
(21) Anmeldenummer: 07011014.3
(22) Anmeldetag: 05.06.2007
(51) Int. Cl.: B01D 46/52

(54) **Komprimierbares Filterelement**
Compressible filter element
Elément de filtre comprimable

(30) Priorität: 14.06.2006 DE 102006028039; 29.06.2006 DE 102006030410
(43) Veröffentlichungstag der Anmeldung: 19.12.2007
(73) Patentinhaber: Carl Freudenberg KG, 69469 Weinheim (DE); Montaplast GmbH, 51597 Morsbach (DE)
(72) Erfinder: Stahl, Ulrich, 69514 Laudenbach (DE); Felber, Uwe, 69518 Absteinach (DE); Beer, Bernhard, 51545 Waldbröl (DE); Krüger, Jörn-Uwe, 51597 Morsbach (DE); Merz, Rolf Daniel, 51588 Nümbrecht (DE); Gerhard, Werner, 57577 Hamm/Sieg (DE)

(56) Entgegenhaltungen:
- EP-A1- 0 695 573
- DE-A1- 2 901 876
- DE-A1- 3 408 520
- DE-A1-5102004 054 24
- US-A- 4 735 720
- US-A- 5 924 445

## Beschreibung

### Technisches Gebiet

Die Erfindung betrifft ein Filterelement gemäß dem Oberbegriff des Patentanspruchs 1.

### Stand der Technik

Aus der EP 0 695 573 A1 ist ein Filterelement bekannt, welches einen geschichteten Vliesstoff aufweist, der bereichsweise stark verdichtet ist. Aus der DE 10 2004 054 245 A1 ist ein Filterelement bekannt, welches ein Filtermaterial und ein Stützmaterial aufweist. Die US 5 924 445 A zeigt ein Filterelement, welches eine Vielzahl von Flussöffnungen aufweist. Aus der DE 34 08 520 A1 ist ein Filterelement bekannt, in welchem teilweise eine Kraftstoff-Saugrohrieitung angeordnet ist. Aus der DE 29 01 876 A1 ist ein Filterelement für einen Staubsauger aus Papier bekannt. In der US 4 735 720 A ist ein Filterelement offenbart, welches als Bindermaterial ein thermoplastisches Harz aufweist.

Filterelemente der eingangs genannten Art sind aus dem Stand der Technik bereits bekannt und finden insbesondere in der Motorluftfiltration in Kraftfahrzeugen, nämlich in deren Ansaugsystemen, Anwendung. Die bekannten Filterelemente weisen als Filtermedium Papier auf, welches gefaltet ist.

Die bekannten Filterelemente werden derzeit häufig in Knautschzonen und damit crash-relevanten Bereichen eines Kraftfahrzeuges angeordnet. Hierbei ist problematisch, dass die bekannten Filterelemente auf Grund ihrer kompakten Bauweise und starren Form! einen sehr großen Widerstand gegen Deformierungen bieten und die Deformierbarkeit des gesamten Ansaugsystems beschränken. Dies ist insbesondere dann kritisch, wenn ein Verkehrsteilnehmer, z.B. ein Fußgänger, mit einem Körperteil gegen einen Bereich der Karosserie stößt, unter dem ein solch hartes Bauelement angeordnet ist.

Im ungünstigsten Falle ist unter der Karosserie, beispielsweise der Motorhaube, in einem Ansaugsystem ein gattungsbildendes Filterelement aus Papier angeordnet. Dann ist die Deformierbarkeit des Ansaugsystems und damit der Karosserie durch das gattungsbildende Filterelement so stark beschränkt, dass eine erhebliche Verletzungsgefahr des Verkehrsteilnehmers gegeben ist.

Aus diesem Grund müssen die gattungsbildenden Filterelemente derart von Karosseriebauteilen beabstandet angeordnet werden, dass eine problemlose Deformierbarkeit der Karosserie bzw. des Ansaugsystems gewährleistet ist. Die Folge hiervon sind ungenutzte Bauräume, insbesondere unter der Motorhaube,

### Darstellung der Erfindung

Der Erfindung liegt daher die Aufgabe zugrunde, ein Filterelement der eingangs genannten Art derart auszugestalten und weiterzubilden, dass dieses eine ausreichend große Filterleistung bei problemloser Deformierbarkeit aufweist.

Erfindungsgemäß wird die voran stehende Aufgabe mit den Merkmalen des Patentanspruchs 1 gelöst. Danach ist das Filterelement dadurch gekennzeichnet, dass der Abstand um mindestens 20 %, vorzugsweise um mindestens 75 %, verringerbar ist.

Erfindungsgemäß ist erkannt worden, dass die Verwendung eines Vliesstoffes auf überraschend einfache Weise erlaubt, ein reversibel deformierbares Filterelement herzustellen, welches eine ausreichend große Filterfläche bietet. Ganz konkret ist erkannt worden, dass die Filterleistung eines Papiers auch von einem Vliesstoff gewährleistet werden kann, der eine bestimmte Faltung bei geringerer Faltendichte aufweist, Dabei ist erkannt worden, dass die Faltenrücken zweier benachbarter Falten weiter beabstandet sein können als die eines Filtermediums aus Papier, also die Faltendichte verringert werden kann. Die weitere Beabstandung der Falten erlaubt ein Einknicken der Falten und damit eine problemlose Verringerung des Abstands zwischen den Bauteilen. Des Weiteren ist erkannt worden, dass ein Vliesstoff eine besondere Elastizität aufweist, die eine reversible Deformierung des Filterelements ermöglicht. Dies gewährleistet eine bedingte Gebrauchstauglichkeit des Filterelements nach Deformierung durch einen Unfall, nämlich eine sogenannte Notlaufeigenschaft. Insoweit ist ein Filterelement angegeben, welches bei ausreichend großer Filterleistung eine problemlose Deformierbarkeit aufweist.

Das Filtermedium weist Falten auf, deren Faltenstirnseiten den Bauteilen zugewandt sind. Diese konkrete Ausgestaltung erlaubt eine problemlose Verbindung des Filtermediums mit den Bauteilen. Vor diesem Hintergrund ist beispielsweise denkbar, dass den Bauteilen ein Klebstoff zugeordnet ist, in welchen die Faltenstirnseiten eintauchen und somit einen Verbund mit den Bauteilen eingehen.

Der Abstand zwischen den Bauteilen ist um mindestens 20%, vorzugsweise um mindestens 75%, verringerbar. Diese konkrete Ausgestaltung stellt sicher, dass ein Fußgänger, der mit einem Körperteil gegen die Karosserie eines Kraftfahrzeugs stößt, vor Verletzungen weitgehend geschont wird. Das Verletzungsrisiko wird hierdurch erheblich verringert.

Folglich ist die eingangs genannte Aufgabe gelöst.

Vor diesem Hintergrund ist denkbar, dass das Filtermedium eine Höhe h aufweist, die um mindestens 20%, vorzugsweise um mindestens 75%, verringerbar ist. Bei dieser konkreten Ausgestaltung können die Bauteile aus einem harten Material sein und müssen nahezu nichts zur Komprimierbarkeit des gesamten Filterelements beitragen. Insoweit ist ein besonders kostengünstiger Fertigungsprozess realisierbar, da die Bauteile aus herkömmlichen Kunststoffen gefertigt werden können. Insbesondere ist aber auch denkbar, dass die Bauteile aus einem verfestigten Vliesstoff gefertigt sind. Hierdurch ist ein materialeinheltllcher Aufbau des Filterelements realisierbar.

Die Komprimierbarkeit des Filterelements, das heisst dessen Kraft-Weg-Verhalten, könnte durch Modifizierung des verwendeten Vliesstoffs eingestellt werden. Diese Modifizierung könnte durch Verwendung von Fasern unterschiedlicher Biegesteifigkeit realisiert werden, Dabei könnten synthetische Fasern mit natürlichen Fasern in einem bestimmten Mischungsverhältnis miteinander verbunden werden. Die Steifigkeit des Vliesstoffes könnte auch durch unterschiedliche Fertigungsmethoden eingestellt werden. Beispielsweise könnte durch geeignete Wahl der Parameter einer Wasserstrahlvernadelung die Steifigkeit des Vliesstoffs eingestellt werden.

Der Vliesstoff könnte synthetische Fasern umfassen oder vollständig aus synthetischen Fasern bestehen. Hierbei ist denkbar, dass die synthetischen Fasern aus Polypropylen, Polyester oder Polybutadienterephtalat gefertigt sind. Die Kraftfahrzeugindustrie verlangt von einem gebrauchstauglichen Filterelement in Ansaugsystemen gemäß DIN ISO 5011 eine ganz konkrete Filterleistung, nämlich eine Abscheideleistung von mehr als 98 %. Nach dieser Norm zeigt ein Filterelement nur dann eine ausreichende Filterleistung, wenn 98 % der Teststäube in der zu filternden Luft im Filtermedium abgeschieden werden. Überraschenderweise hat sich gezeigt, dass ein Vliesstoff, der synthetische Fasern umfasst, diesen Anforderungen bei problemloser Deformierbarkeit genügt. Die problemlose Deformierbarkeit wird wesentlich durch einen relativ weiten Faltenabstand realisiert.

Das Filtermedium könnte aus einem thermoplastischen Vliesstoff gefertigt sein. Ein thermoplastischer Vliesstoff zeigt überraschenderweise eine hohe Komprimierbarkeit im gefalteten Zustand. Versuche haben ergeben, dass ein gefalteter Vliesstoff einer Höhe von 48 mm, der in Richtung der Faltenrücken mit Kraft beaufschlagt wird, bei 100 N um 28,32 mm komprimierbar ist. Bei 0, 5 N, 10 N, 20 N und 50 N ist der untersuchte Vliesstoff um 0, 0,4 mm, 2,76 mm, 9,54 mm bzw. 17,23 mm in seiner Höhe verringerbar. Der Kraftvektor ist bei dieser Messung parallel zu den Faltenrücken orientiert. Bei dem verwendeten thermoplastischen Vliesstoff handelt es sich um einen Vliesstoff, der aus Polyesterfasern gefertigt ist. Der Vliesstoff weist kein Bindemittel auf, die Fasern sind vielmehr durch thermische Verfestigungsverfahren miteinander verschweisst. Der Vliesstoff weist ein Flächengewicht von 230 g/m² auf.

Es ist auch denkbar, Vliesstoffe einzusetzen, die ein Flächengewicht von 100 bis 500 g/m² aufweisen. Vliesstoffe dieser Flächengewichte weisen eine ausreichend hohe Eigensteifigkeit auf, um zwei Bauteile voneinander zu beabstanden und erbringen zugleich eine ausreichend hohe Filterleistung.

Des Weiteren erlaubt die Verwendung eines Vliesstoffs überraschenderweise die Beabstandung der Bauteile allein durch das Filtermedium, da der Vliesstoff aufgrund seiner Faserstruktur eine ausreichend hohe Eigensteifigkeit zeigt. Ein Vliesstoff weist auch nach Durchnässung und anschließender Trocknung im Gegensatz zu Papier eine sehr hohe Reißfestigkeit und damit hohe Stabilität auf. Schließlich zeigt ein Vliesstoff aus synthetischem Material eine hohe Temperaturstabilität und eignet sich daher für den Einsatz in Motorräumen von Kraftfahrzeugen. Weitere Stabilisierungsmittel, die das Filtermedium bei der Beabstandung der Bauteile unterstützen, sind nicht zwingend notwendig. Hierdurch ist eine kostengünstige Fertigung des Filterelements realisierbar. Weitere Stabilisierungsmittel können aber vorgesehen werden, um die Deformierbarkeit des Filterelments definiert einzustellen.

Ganz konkret ist auch denkbar, dass die Falten mit Sollbiegestellen versehen sind, welche ein definiertes Einknicken des Filtermediums bei Kraftbeaufschlagung bewirken. Insbesondere ist denkbar, dass den Falten Konturen aufgeprägt sind, die ein bestimmtes Einknickverhalten der Falten bei Kraftbeaufschlagung der Bauteile vorgeben oder einleiten. Die Sollbiegestellen könnten durch Ultraschallschweißprozesse auf das Filtermedium aufgeprägt werden. Uitraschaiischweißprozesse lassen sich besonders schnell und kostengünstig durchführen und ermöglichen eine problemlose bereichsweise Verjüngung eines Filtermediums. Denkbar ist auch, eine Prägung des Filtermediums allein durch Kraftbaufschlagung zu realisieren.

Um eine problemlose Deformierbarkeit des Filterelements zu bewirken, könnten die Faltenrücken einen von 90° verschiedenen Winkel mit den Grundflächen der Bauteile einschließen. Die so geneigten Faltenrücken lassen sich dann problemlos und besonders leicht derart deformieren, dass sich die Bauteile einander annähern.

Denkbar ist auch, dass zwei oder mehr Falten in definierten Abständen derart miteinander verbunden sind, dass die Faltenwandungen oder Faltenflanken aneinanderliegen. Es könnten Bereiche von zwei oder mehreren verbundenen Falten durch eine definierte Anzahl unverbundener Falten beabstandet sein. So könnten ganz konket, jedoch nicht hierauf einschränkend beispielsweise alle fünf Falten zwei Falten miteinander verbunden sein. Hierdurch kann die Deformierbarkeit des Filterelements eingestellt werden. Die Faltenwandungen könnten miteinander verklebt, verschweisst oder formschlüssig miteinander verbunden sein. Eine Verklebung stellt einen sehr festen Verbund her. Eine Verschweissung lässt sich unter Aussteifung der Falten realisieren. Der formschlüssige Verbund lässt ein Ablösen der Falten voneinander unter bestimmten Umständen zu.

Die Faltenrücken zweier benachbarter Falten könnten einen Abstand von 0,5 bis 3 cm aufweisen. Die Auswahl des Abstands aus diesem Bereich hat sich als besonders vorteilhaft erwiesen, um einerseits eine problemlose Deformierbarkeit des Filtermediums und andererseits eine noch ausreichend große effektive Filterfläche zur Verfügung zu stellen, die für die Motorluftfiltration notwendig ist. Filtermedien aus Papier können bei einem solchen Faltenrückenabstand keine ausreichende Filterleistung, d.h. keine von der KFZ-Industrie geforderte Abscheiderate, realisieren und sind daher für Ansaugsysteme ungeeignet.

Zumindest ein Bauteil könnte aus einem Material gefertigt sein, dass härter oder biegesteifer als das Filtermedium ist. Diese konkrete Ausgestaltung erlaubt eine Fertigung eines stabilen Filterelements, welches das Filtermedium gegen Schlag- und Stoßeinwirkungen schützt. Des Weiteren wird das Filtermedium vor Verschmutzungen geschützt. Vor diesem Hintergrund ist denkbar, dass zumindest ein Bauteil aus einem verfestigten Vliesstoff gefertigt ist.

Um eine kostengünstige Fertigung zu realisieren könnte zumindest ein Bauteil spritzgusstechnisch gefertigt sein. Hierbei ist denkbar, dass die Bauteile aus Polypropylen oder Polyamid gefertigt sind.

Zumindest ein Bauteil könnte geschäumt gefertigt sein. Ein solches Bauteil geht einen sehr guten Verbund mit dem Filtermedium ein, da das geschäumte Material die Falten des Filtermediums umfliessen kann. Als geschäumtes Material könnte Polyurethan verwendet werden. Dieses Material ist problemlos verarbeitbar.

Denkbar ist auch, die Bauteile aus Metallen zu fertigen. Metalle geben dem Filterelement eine hohe Stabilität und Temperaturfestigkeit.

Zumindest ein Bauteil könnte einen Durchgang aufweisen. Hierdurch ist sichergestellt, dass an das Filterelement Rohre, Schläuche oder andere Leitungen für ein zu filterndes Medium anschließbar sind. Vor diesem Hintergrund ist ganz konkret denkbar, dass die Bauteile ein Filtermedium sandwichartig einschließen, wobei die Bauteile und das Filtermedium die Wandungen eines Volumens bilden. In dieses Volumen kann das zu filternde Medium durch das Filtermedium, nämlich eine Wandung des Filterelements, einströmen und gefiltert durch den Durchgang austreten. Selbstverständlich ist ebenfalls eine Umkehrung der Strömungsrichtung denkbar, nämlich ein Eintritt des ungefilterten Mediums durch den Durchgang und ein Austritt durch die Wandung.

Dem Durchgang könnten Dichtmittel zugeordnet sein, die als Rastmittel fungieren. Diese konkrete Ausgestaltung erlaubt die Verbindung des Durchgangs mit einem Schlauch, einem Rohr oder einer anderen Leitung, wobei einerseits eine elastische Dichtung und andererseits ein kraftschlüssiger Verbund hergestellt wird. Ganz konkret ist hierbei denkbar, dass das Dichtmittel als Dichtlippe ausgestaltet ist, die einen Vorsprung aufweist, der von einem Gegenstück hintergriffen werden kann.

Zumindest einem Bauteil könnten Rastmittel zugeordnet sein, die mit dem Bauteil einstückig ausgebildet sind und in komplementär dazu ausgebildete Rastmittelaufnahmen eines Luftfiltergehäuses einrastbar sind. Diese Rastmittel könnten vom Rand des Bauteils zungenförmig abragen. Hierbei ist konkret denkbar, dass die zungenförmigen Rastmittel rundum laufend an einem Bauteil angeordnet sind. Hierdurch ist das Filterelement in ein Luftfiltergehäuse eines Kraftfahrzeugs ohne Einsatz weiterer Befestigungsmittel einrastbar.

Zumindest einem Bauteil könnten Sollbruchmittel zugeordnet sein, welche die Bauteile in Ergänzung zu dem Filtermedium voneinander beabstanden. Hierdurch ist die Verwendung eines sehr weichen und sehr leicht deformierbaren Filtermediums möglich, da die Beabstandung der Bauteile überwiegend von den Sollbruchmitteln übernommen wird. Die Sollbruchmittel könnten derart ausgestaltet sein, dass sie bei einer ganz konkreten Kraftbeaufschlagung der Bauteile brechen und eine Deformierbarkeit des Filterelements sicherstellen.

Denkbar ist auch, dass zwischen den Bauteilen elastisch deformierbare Stabilisierungselemente angeordnet sind. Hierdurch ist ein einfedern und ausfedern der Bauteile möglich. Ganz konkret könnten die Stabilisierungselemente als Spiralfedern oder Blattfedern ausgebildet sein, da diese mechanisch sehr stabil und im Hinblick auf ihre Federkonstanten problemlos einstellbar sind.

Das Filterelement könnte als Luftfilter eines Kraftfahrzeugs ausgestaltet sein. Die problemlose Deformierbarkeit des erfindungsgemäßen Filterelements eignet es hervorragend für die Anordnung in einem Kraftfahrzeug direkt unter der Motorhaube, wo üblicherweise Luftfilter positioniert werden. Vor diesem Hintergrund ist denkbar, dass ein Bauteil als Abdeckung des Volumens im Luftfiltergehäuse fungiert, in welches das Filterelement eingesetzt wird. Dem Bauteil könnten zur Abdichtung des Volumens im Luftfiltergehäuse Dichtungen werksseitig zugeordnet sein. Hierdurch ist ein schneller Montageprozess realisierbar.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche, andererseits auf die nachfolgende Erläuterung bevorzugter Ausführungsbeispiele des erfindungsgemäßen Filterelements anhand der Zeichnung zu verweisen.

In Verbindung mit der Erläuterung der bevorzugten Ausführungsbeispiele anhand der Zeichnung werden auch im Allgemeinen bevorzugte Ausgestaltungen und Weiterbildungen der Lehre erläutert.

### Kurzbeschreibung der Zeichnung

In der Zeichnung zeigen
- Fig. 1: in einer Schnittansicht ein Filterelement, welches aus zwei Bauteilen und einem Filtermedium besteht,
- Fig. 2: eine Draufsicht auf ein Bauteil eines Filterelements gemäß Fig. 1,
- Fig. 3: einen Durchgangsbereich in einem Bauteil des Filterelements gemäß Fig. 1 und
- Fig. 4: ein Filterelement mit einem als Spiralfeder ausgebildeten Stabilisierungselement.

### Ausführung der Erfindung

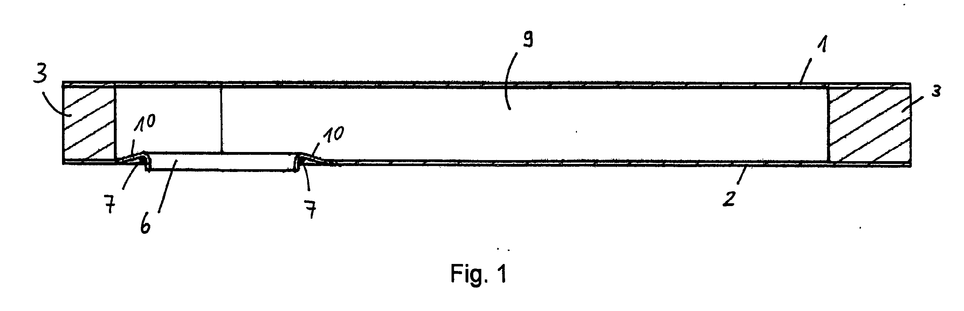

Fig. 1 zeigt ein erstes Bauteil 1, ein zweites Bauteil 2 und ein zwischen den Bauteilen 1, 2 angeordnetes, gefaltetes Filtermedium 3. Die Bauteile 1, 2 sind durch das Filtermedium 3 beabstandet. Das Filtermedium 3 ist aus einem Vliesstoff gefertigt und derart gefaltet, dass ein Abstand zwischen den Bauteilen 1,2 bei deren Kraftbeaufschlagung zumindest bereichsweise reversibel verringerbar ist.

Das Filtermedium 3 fungiert aufgrund seiner Eigensteifigkeit als Stützmaterial und kann ohne weitere Stabilisierungsmittel die beiden Bauteile 1, 2 als einzelnes Teil beabstanden. Das Filtermedium 3 begrenzt mit den Bauteilen 1, 2 ein Volumen 9. Im Bauteil 2 ist ein Durchgang 6 ausgebildet, an den Leitungen zum Volumen 9 anflanschbar sind. Dem Durchgang 6 ist ein rampenförmiger Bereich 10 und ein Dichtmittel 7 zugeordnet.

Das zu filternde Medium tritt über das Filtermedium 3 in das Volumen 9 ein und wird dabei gefiltert. Das gefilterte Medium tritt über den Durchgang 6 aus dem Volumen 9 wieder aus.

Ein zu filterndes Medium kann auch durch den Durchgang 6 in das Volumen 9 des Filterelements eindringen und über das Filtermedium 3 austreten. Das Volumen 9 wird durch die Bauteile 1, 2 und das Filtermedium 3 begrenzt.

Der Abstand zwischen den beiden Bauteilen 1, 2 ist um mindestens 20%, vorzugsweise um mindestens 75% verringerbar. Das Filtermedium 3 ist aus einem thermoplastischen Vliesstoff gefertigt.

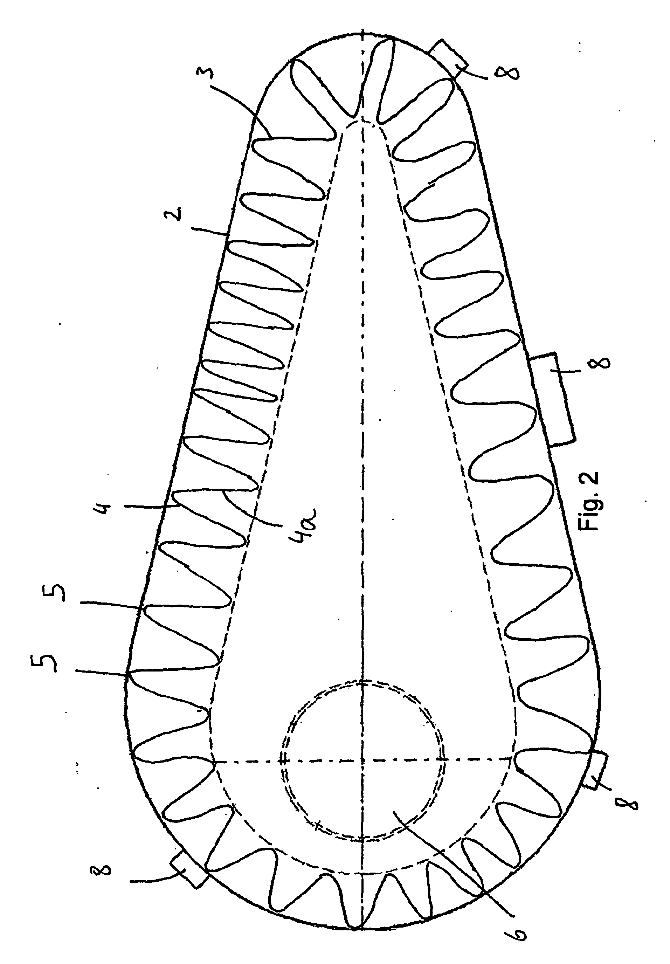

Fig. 2 zeigt eine Draufsicht auf ein Bauteil 2, dem ein Filtermedium 3 aus einem thermoplastischen Vliesstoff zugeordnet ist. Das Filtermedium 3 weist Falten 4 auf, deren Faltenstirnseiten 4a den Bauteilen 1, 2 zugewandt sind. Dabei ist eine Faltenstirnseite 4a dem Bauteil 2 derart zugewandt, dass die Faltenstirnseiten 4a in einem Klebstoff eingetaucht sind. Hierdurch wird ein Verbund zwischen dem Bauteil 2 und dem Filtermedium 3 hergestellt.

Die Faltenrücken 5 zweier benachbarter Falten weisen einen Abstand von 0,5 bis 3 cm auf.

Die Bauteile 1, 2 sind aus einem Material gefertigt, das härter als das Filtermedium 3 ist. Die Bauteile 1, 2 sind spritzgusstechnisch gefertigt und bestehen aus Polypropylen.

Aus Fig. 2 ist ersichtlich, dass das Filterelement einen keilförmigen bzw. tropfenförmigen Aufbau zeigt. Das gefaltete Filtermedium 3 aus einem thermoplastischen Vliesstoff wird sandwichartig zwischen den Bauteilen 2 und dem nicht gezeigten Bauteil 1 aufgenommen. Bauteil 2 weist einen Durchgang 6 auf.

Dem Bauteil 2 sind Rastmittel 8 zugeordnet, die mit dem Bauteil 2 einstückig ausgebildet sind und in komplementär dazu ausgebildete Rastmittelaufnahmen eines Luftfiltergehäuses einrastbar sind. Die Rastmittel 8 ragen vom Rand des Bauteils 2 zungenförmig ab. Die zungenförmigen Rastmittel 8 sind rundum laufend am Bauteil 2 angeordnet. Hierdurch ist das Filterelement in ein Luftfiltergehäuse eines Kraftfahrzeugs ohne Einsatz weiterer Befestigungsmittel einrastbar.

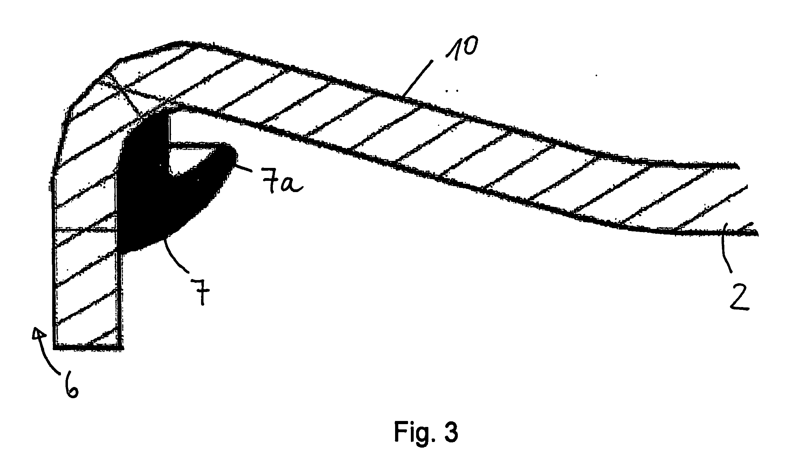

Fig. 3 zeigt einen Ausschnitt des Bauteils 2 gemäß Fig. 1, welches mit dem Bauteil 1 durch ein Filtermedium 3 verbunden ist. Das Bauteil 2 weist einen Durchgang 6 auf, dem ein Dichtmittel 7 zugeordnet ist. Das Dichtmittel 7 ist als Dichtlippe aus einem thermoplastischen Ethylen ausgestaltet.

Das Dichtmittel 7 weist einen Vorsprung 7a auf, der als Rastmittel fungiert, in das ein Gegenstück einrasten kann. Das Gegenstück kann als Schlauch, Rohr oder Leitung für ein zu filterndes oder gefiltertes Medium ausgestaltet sein.

Dem Durchgang 6 ist ein rampenförmiger Bereich 10 zugeordnet, der ein besonders günstiges Strömungsverhalten des zu filternden Mediums in dem relativ engen Volumen 9 bewirkt.

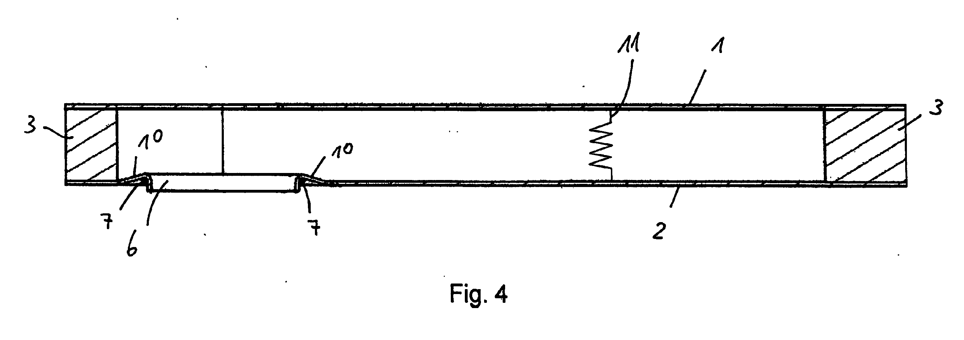

Fig. 4 zeigt ein erstes Bauteil 1, ein zweites Bauteil 2 und ein zwischen den Bauteilen 1, 2 angeordnetes, gefaltetes Filtermedium 3. Die Bauteile 1, 2 sind durch das Filtermedium 3 beabstandet. Das Filtermedium 3 ist aus einem Vliesstoff gefertigt und derart gefaltet, dass ein Abstand zwischen den Bauteilen 1, 2 bei deren Kraftbeaufschlagung zumindest bereichsweise reversibel verringerbar ist.

Das Filtermedium 3 fungiert aufgrund seiner Eigensteifigkeit als Stützmaterial und beabstandet zusammen mit einem Stabilisierungselement 11 die beiden Bauteile 1, 2. Das Stabilisierungselement 11 ist als Spiralfeder ausgebildet und bewirkt ein Einfedern und Ausfedern der Bauteile 1, 2. Insbesondere vermag die Spiralfeder 11 zwei einander angenäherte Bauteile 1, 2 nach Deformierung des Filtermediums 3 erneut zu beabstanden und in deren ursprüngliche Lage zu verbringen.

Das Filtermedium 3 begrenzt mit den Bauteilen 1, 2 ein Volumen 9. Im Bauteil 2 ist ein Durchgang 6 ausgebildet, an den Leitungen zum Volumen 9 anflanschbar sind. Dem Durchgang 6 ist ein rampenförmiger Bereich 10 und ein Dichtmittel 7 zugeordnet.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

Abschließend sei ganz besonders hervorgehoben, dass die zuvor rein willkürlich gewählten Ausführungsbeispiele lediglich zur Erörterung der erfindungsgemäßen Lehre dienen, diese jedoch nicht auf diese Ausführungsbeispiele einschränken.

## Patentansprüche

1. Filterelement, umfassend ein erstes Bauteil (1), ein zweites Bauteil (2) und ein zwischen den Bauteilen (1, 2) angeordnetes, gefaltetes Filtermedium (3), wobei die Bauteile (1, 2) durch das Filtermedium (3) beabstandet sind, wobei das Filtermedium (3) aus einem Vliesstoff gefertigt und derart gefaltet ist, dass ein Abstand zwischen den Bauteilen (1, 2) bei deren Kraftbeaufschlagung zumindest bereichsweise reversibel verringerbar ist und der Abstand um mindestens 20 %, vorzugsweise um mindestens 75 %, verringerbar ist, und wobei das Filtermedium (3) Falten (4) aufweist, deren Faltenstirnseiten (4a, 4b) den Bauteilen (1, 2) zugewandt sind.

2. Filterelement nach Anspruch 1, **dadurch gekennzeichnet, dass** das Filtermedium (3) eine Höhe h aufweist, die um mindestens 20%, vorzugsweise um mindestens 75 %, verringerbar ist.

3. Filterelement nach einem der Ansprüche 1 oder 2, **dadurch gekennzeichnet, dass** das Filtermedium (3) aus einem Vliesstoff gefertigt ist, der synthetische fasern oder verschiedene Fasern unterschiedlicher Biegesteifigkeit umfasst.

4. Filterelement nach einem der Ansprüche 1 bis 3, **dadurch gekennzeichnet, dass** das Filtermedium (3) aus einem thermoplastischen Vliesstoff gefertigt ist.

5. Filterelement nach einem der Ansprüche 1 bis 4, **dadurch gekennzeichnet, dass** die Faltenrücken (5) zweier benachbarter Falten (4) einen Abstand von 0,5 bis 3 cm aufweisen.

6. Filterelement nach einem der Ansprüche 1 bis 5, **dadurch gekennzeichnet, dass** die Falten mit Sollbiegestellen versehen sind.

7. Filterelement nach einem der Ansprüche 1 bis 6, **dadurch gekennzeichnet, dass** zwei oder mehr Falten in definierten Abständen derart miteinander verbunden sind, dass die Faltenwandungen oder Faltenflanken zumindest teilweise aneinanderliegen.

8. Filterelement nach einem der Ansprüche 1 bis 7, **dadurch gekennzeichnet, dass** zumindest ein Bauteil (1, 2) aus einem Material gefertigt ist, das härter als das Filtermedium (3) ist.

9. Filterelement nach Anspruch 8, **dadurch gekennzeichnet, dass** zumindest ein Bauteil (1, 2) spritzgusstechnisch gefertigt ist.

10. Filterelement nach einem der Ansprüche 1 bis 9, **dadurch gekennzeichnet**, das zumindest ein Bauteil (1, 2) einen Durchgang (6) aufweist.

11. Filterelement nach Anspruch 10, **dadurch gekennzeichnet, dass** dem Durchgang (6) Dichtmittel (7) zugeordnet sind, die als Rastmittel fungieren.

12. Filterelement nach einem der Ansprüche 1 bis 11, **dadurch gekennzeichnet, dass** zumindest einem Bauteil (1, 2) Rastmittel (8) zugeordnet sind, die mit dem Bauteil (1, 2) einstückig ausgebildet sind.

13. Filterelement nach einem der Ansprüche 1 bis 12, **dadurch gekennzeichnet, dass** zumindest einem Bauteil (1, 2) Sollbruchmittel zugeordnet sind.

14. Filterelement nach einem der Ansprüche 1 bis 13, **dadurch gekennzeichnet, dass** zumindest einem Bauteil (1, 2) elastische Stabilisierungselemente (11) zugeordnet sind.

15. Filterelement nach einem der Ansprüche 1 bis 14, **gekennzeichnet durch** eine Ausgestaltung als Luftfilter eines Kraftfahrzeugs.

## Claims

1. Filter element, comprising a first component (1), a second component (2) and a folded filter medium (3) arranged between the components (1, 2), the components (1, 2) being spaced apart by the filter medium (3), the filter medium (3) being produced from a nonwoven material and folded in such a way that a distance between the components (1, 2) can be reversibly reduced, at least in certain regions, when pressure is applied to them and the distance can be reduced by at least 20%, preferably by at least 75%, and the filter medium (3) having folds (4), the end faces (4a, 4b) of which are facing the components (1, 2).

2. Filter element according to Claim 1, **characterized in that** the filter medium (3) has a height h, which can be reduced by at least 20%, preferably by at least 75%.

3. Filter element according to either of Claims 1 and 2, **characterized in that** the filter medium (3) is produced from a nonwoven material which comprises synthetic fibres or various fibres of different flexural rigidity.

4. Filter element according to one of Claims 1 to 3, **characterized in that** the filter medium (3) is produced from a thermoplastic nonwoven material.

5. Filter element according to one of Claims 1 to 4, **characterized in that** the backs (5) of two adjacent folds (4) have a spacing of 0.5 to 3 cm.

6. Filter element according to one of Claims 1 to 5, **characterized in that** the folds are provided with predetermined bending points.

7. Filter element according to one of Claims 1 to 6, **characterized in that** two or more folds are connected to one another at defined spacings in such a way that the walls or flanks of the folds lie at least partially one against the other.

8. Filter element according to one of Claims 1 to 7, **characterized in that** at least one component (1, 2) is produced from a material that is harder than the filter medium (3).

9. Filter element according to Claim 8, **characterized in that** at least one component (1, 2) is produced by injection moulding.

10. Filter element according to one of Claims 1 to 9, **characterized in that** at least one component (1, 2) has a passage (6).

11. Filter element according to Claim 10, **characterized in that** the passage (6) is assigned sealing means (7) that act as latching means.

12. Filter element according to one of Claims 1 to 11, **characterized in that** at least one component (1, 2) is assigned latching means (8) that are formed in one piece with the component (1, 2).

13. Filter element according to one of Claims 1 to 12, **characterized in that** at least one component (1, 2) is assigned predetermined breaking means.

14. Filter element according to one of Claims 1 to 13, **characterized in that** at least one component (1, 2) is assigned elastic stabilizing elements (11).

15. Filter element according to one of Claims 1 to 14, **characterized by** a configuration as an air filter of a motor vehicle.

## Revendications

1. Elément de filtration comprenant une première pièce (1), une deuxième pièce (2) et un milieu de filtration (3) plissé disposé entre les deux pièces (1, 2), les pièces (1, 2) étant écartées par le milieu de filtration (3), le milieu de filtration (3) étant fabriqué dans un non-tissé et plissé de sorte qu'un écart entre les pièces (1, 2) lors de la soumission à une force de ces dernières soit susceptible d'être diminué au moins par zones de façon réversible et que l'écart soit susceptible d'être diminué d'au moins 20 %, de préférence d'au moins 75 %, le milieu de filtration (3) comportant des plis (4), dont les faces frontales des plis (4a, 4b) sont dirigées vers les pièces (1, 2).

2. Elément de filtration selon la revendication 1, **caractérisé en ce que** le milieu de filtration (3) a une hauteur h qui est susceptible d'être diminuée d'au moins 20 %, de préférence d'au moins 75 %.

3. Elément de filtration selon l'une quelconque des revendications 1 ou 2, **caractérisé en ce que** le milieu de filtration (3) est fabriqué dans un non-tissé comprenant des fibres synthétiques ou différentes fibres de différentes résistances à la flexion.

4. Elément de filtration selon l'une quelconque des revendications 1 à 3, **caractérisé en ce que** le milieu de filtration (3) est fabriqué dans un non-tissé thermoplastique.

5. Elément de filtration selon l'une quelconque des revendications 1 à 4, **caractérisé en ce que** les dos de plis (5) de deux plis (4) voisins présentent un écart de 0,5 à 3 cm.

6. Elément de filtration selon l'une quelconque des revendications 1 à 5, **caractérisé en ce que** les plis sont munis de zones destinées à la flexion.

7. Elément de filtration selon l'une quelconque des revendications 1 à 6, **caractérisé en ce que** deux ou plusieurs plis sont reliés entre eux à des écarts définis, de sorte que les parois des plis ou les flancs des plis soient au moins partiellement adjacent(e)s.

8. Elément de filtration selon l'une quelconque des revendications 1 à 7, **caractérisé en ce qu'**au moins une pièce (1, 2) est fabriquée dans une matière qui est plus dure que le milieu de filtration (3).

9. Elément de filtration selon la revendication 8, **caractérisé en ce qu'**au moins une pièce (1, 2) est fabriquée par technique de moulage par injection.

10. Elément de filtration selon l'une quelconque des revendications 1 à 9, **caractérisé en ce qu'**au moins une pièce (1, 2) comporte un passage (6).

11. Elément de filtration selon la revendication 10, **caractérisé en ce qu'**au passage (6) sont associés des moyens d'étanchéité (7) qui fonctionnent comme des moyens d'enclenchement.

12. Elément de filtration selon l'une quelconque des revendications 1 à 11, **caractérisé en ce qu'**à au moins une pièce (1, 2) sont associés des moyens d'enclenchement (8), qui sont conçus en monobloc avec la pièce (1, 2).

13. Elément de filtration selon l'une quelconque des revendications 1 à 12, **caractérisé en ce qu'**à au moins une pièce (1, 2) sont associés des moyens destinés à la rupture.

14. Elément de filtration selon l'une quelconque des revendications 1 à 13, **caractérisé en ce qu'**à au moins une pièce (1, 2) sont associés des éléments de stabilisation (11) élastiques.

15. Elément de filtration selon l'une quelconque des revendications 1 à 14, **caractérisé par** une conception en tant que filtre à air d'un véhicule automobile.
